# EUROPÄISCHE PATENTSCHRIFT

(11) **EP 1 549 888 B1**
(45) Veröffentlichungstag und Bekanntmachung des Hinweises auf die Patenterteilung: **25.10.2006**
(21) Anmeldenummer: 03757699.8
(22) Anmeldetag: 08.10.2003
(51) Int. Cl.: F24J 2/54

(54) **STEUERANLAGE FÜR SOLARFELDER**
CONTROLLER FOR SOLAR FIELDS
INSTALLATION DE COMMANDE POUR CHAMPS SOLAIRES

(30) Priorität: 10.10.2002 DE 10247177
(43) Veröffentlichungstag der Anmeldung: 06.07.2005
(73) Patentinhaber: SUNZENIT GmbH, 14715 Märkisch Luch OT Buschow (DE)
(72) Erfinder: BIEBER, Lothar, 14715 Buschow (DE)
(74) Vertreter: Bergelt, Klaus
(86) Internationale Anmeldenummer: PCT/DE2003/003342
(87) Internationale Veröffentlichungsnummer: WO 2004/036123

(56) Entgegenhaltungen:
- EP-A- 0 909 929
- DE-A- 19 718 358
- FR-A- 2 798 718
- US-A- 4 110 009
- US-A- 4 303 057
- US-A- 4 345 582
- US-A- 4 832 002

## Beschreibung

Die Erfindung betrifft eine Steueranlage für individuell gestaltbare Solarfelder.

Es sind Anordnungen von Sonnen- und Solarkollektoren in den verschiedensten Bauarten bekannt. Generelles Problem dieser Anlagen ist, die Sonneneinstrahlung so effektiv wie möglich zu nutzen. So beinhaltet die DE 3627480 eine Konstruktion, die es ermöglichen soll, die Kollektoren so zu verstellen, dass die Sonneneinstrahlung zu jeder Tages- und Jahreszeit rechtwinklig auf die Einstrahlungsfläche der Kollektoren auftrifft.

Nachteilig bei dieser Lösung, basierend darauf, dass eine Elementengruppe über eine horizontal drehbar gelagerte Welle, welche mit einem Schneckengetriebe verbunden ist, gesteuert wird, ist die Bedienung von Hand und der damit begrenzte Einsatz von Sonnenkollektoren.

Ferner ist nach der DE 199 27 839 A1 eine Vorrichtung zur Konzentration von Sonnenstrahlen bekannt, die über eine Tragkonstruktion, welche aus baugleich ausgebildeten Stellgliedern, die als Teleskopspindeln ausgebildet sind, gesteuert wird. Die hier veröffentlichte Konstruktion ist äußerst kompliziert und für Großanlagen ungeeignet.

Gleichfalls ist eine hydraulische Nachführung von Kollektoren nach dem Sonnenstand in der DE 101 17 622 A1 beschrieben. So kommen für die horizontale und vertikale Nachführung von Kollektoren hydraulische Stellmotore über entsprechende Übertragungselemente zur Anwendung. Die mit großem technischen Aufwand verbundene Steuerhydraulik ist jedoch gleichfalls für Großanlagen zu teuer.

In dem US-Patent 4,303,057 wird ein Antrieb mehrerer, drehbar auf einem Fundament montierten Sonnenlicht-Kondensator-Linsen, als Swimming-Pool-Erhitzer, die über eine Antriebsachse mit einer Vielzahl ineinander greifender Zahnräder gesteuert werden, gezeigt. Die Erfindung hat sich daher die Aufgabe gestellt, eine Steueranlage zur Nachführung von Sonnenkollektoren zu entwickeln die sich für jede Größe angedachter Solarfelder eignet und mit einfachsten und somit kostengünstigen Mitteln realisierbar ist.

Die Aufgabe wird erfindungsgemäß durch die Merkmale des Schutzanspruches 1 und den Unteransprüchen gelöst. Durch die Erfindung wird ermöglicht, dass der Grundkörper sowie die Füße aus lediglich rollgeformtem Stahlblech mit Verstärkungssicken gefertigt werden kann. Es ergibt sich so ein geschlossenes Trageprofil mit integriertem Kabelkanal mit Montagedeckel. Die gesamte Mechanik ist so gegen Umwelteinflüsse geschützt. Wesentlichster Vorteil der Erfindung ist, dass der Grundkörper in beliebiger Länge montierbar ist, so dass in einer Reihe von 1 m bis 1000 m, je nach Standort verschiedene und nicht nur geradlinig ausgeführte Solarfelder entstehen können.

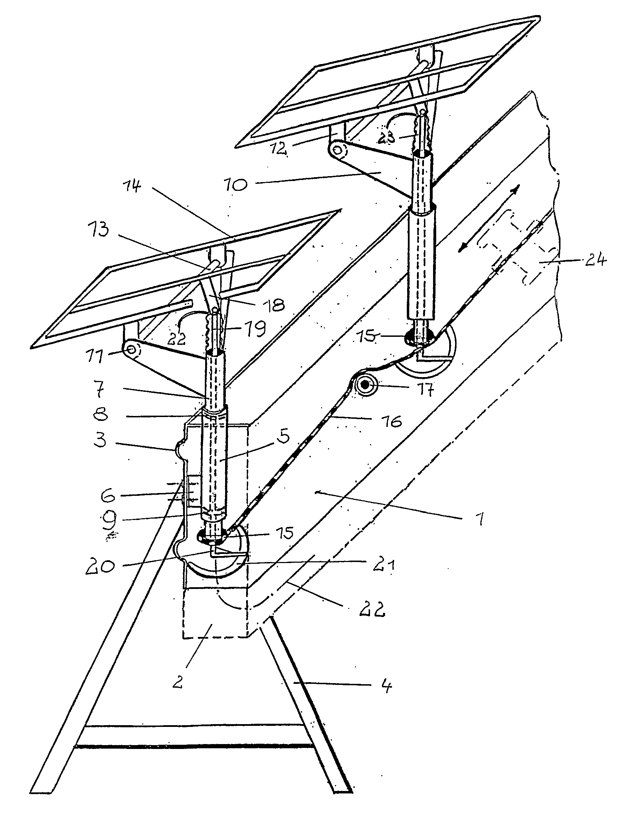

In der Zeichnung ist ein Ausführungsbeispiel der erfindungsgemäßen Steueranlage dargestellt. Die Basis der Steueranlage besteht aus einem Grundkörper 1 mit einem integriertem Kabelkanal 2 mit Montagedeckel aus verzinktem Stahlblech, wobei je nach Größe der Anlage Verstärkungssicken 3 eingebracht sind. Der Grundkörper 1 wird durch beidseitig in bestimmten Abständen angebrachten Füßen 4 aus rollgeformten Stahlblech gehalten. Im Grundkörper 1 sind in vorgesehenen Abständen senkrecht Achskörper 5 eingelassen und mit Halteklammern 6 fest mit dem Grundkörper 1 verbunden. Durch den Achskörper 5 wird, eine Hohlwelle 7, welche oben durch ein Schrägrollenlager 8 und unten durch ein Kugellager 9 drehbar gelagert ist, geführt. Der aus dem oberen Ende des Achskörpers 5 herausragende Teil der Hohlwelle 7 ist fest mit Tragarmen 10 verbunden. In die am vorderen Ende gekröpften Tragarme 10 sind Bohrungen 11 eingearbeitet, in welche Laschen 12 über eine Verbindungswellen 13 drehbar gelagert eingreifen. Die Laschen 12 sind an ihren Außenseiten mit einer Traverse 14 für eine vorgesehene Kollektorenaufnahme fest verbunden. Auf dem an unteren Ende des Achskörpers 5 herausragende Überstand der Hohlwelle 7 ist ein entsprechend ausgestaltetes Antriebsrad 15 aufgebracht, welches von einem Übertragungselement 16 wie einem Drahtseil, einer Kette oder einem Zahnriemen umspannt wird und die Verbindung über Spannrollen 17 zu allen anzusteuernden Traversen 14 für Kollektoren herstellt. Um die Traverse 14 in der Regel zwischen 0° bis 90°, je nach Sonnenstand bewegen zu können ist die Traverse 14 mittig und oberhalb der Verbindungswelle 13 mit einem Stößelaufnahmeblech 18 verbunden, welches am unteren Ende mit einer Tastarmhohlstößelwelle 19, welche durch die Hohlwelle 7 hindurchgeführt wird und die Verbindung zu einem an unteren Ende der Tastarmhohlstößelwelle 19 angebrachten Tastfinger 20, hergestellt. Der Tastfinger 20 gleitet über einen entsprechend winklig im Grundkörper 1 eingesetzten Sonnanbahnlaufring 21 zur Erreichung der genannten Winkelstellung. Die Tastarmhohlstößelwelle 19 ist gleichzeitig als Stromkabelführung 22 nutzbar. Zur Vermeidung von Witterungseinflüssen ist die aus der Hohlwelle herausfahrbare Tastarmhohlstößelwelle 19 mit einer Schutzhülle 23 versehen. Ein mit dem Übertragungselement 16 (Seil, Kette, Zahnriemen) integrierter Getriebemotor 24 übernimmt so den möglichen Antrieb von bis zu Einhundert Kollektoren. Durch eine Elektroniksonnenuhr, die mit einer Fotozelle gekoppelt ist, wird der Getriebemotor 24 angesteuert, so dass die vollautomatische Nachführung der Sonne gewährleistet ist. Außerdem besteht die Möglichkeit durch einen Windwächter bei Bedarf die Anlage auf Sturmstellung umzuschalten.

### Bezugszeichen

- 1 =: Grundkörper
- 2 =: Kabelkanal
- 3 =: Verstärkungssicken
- 4 =: Füße
- 5 =: Achskörper
- 6 =: Halteklammer
- 7 =: Hohlwelle
- 8 =: Schrägwellenlager
- 9 =: Kugellager
- 10 =: Tragarm
- 11 =: Bohrungen
- 12 =: Laschen
- 13 =: Verbindungswelle
- 14 =: Traverse
- 15 =: Antriebsrad
- 16 =: Übertragungselement
- 17 =: Spannrollen
- 18 =: Stößelaufnahmeblech
- 19 =: Tastarmhohlstößelwelle
- 20 =: Tastfinger
- 21 =: Sonnenlaufbahnring
- 22 =: Stromkabelführung
- 23 =: Schutzhülle
- 24 =: Getriebemotor

## Patentansprüche

1. Steueranlage für Solarfelder unter Verwendung mehrerer in Verbindung stehender ansteuerbarer Antriebsräder, wobei in einem Grundkörper (1) in vorgesehenen Abständen senkrecht Achskörper (5) eingelassen sind, in welchen jeweils eine Hohlwelle (7) geführt wird, wobei das obere, aus dem Achskörper (5) herausragende Teil, mit einem Tragarm (10) verbunden ist und am unteren Ende des aus dem Achskörper (5) herausragenden Überstandes der Hohlwelle (7) ein entsprechend ausgestaltetes Antriebsrad (15) aufgebracht ist, welches von einem Übertragungselement (16) umspannt ist, welches die Übertragung zu allen anzusteuernden Traversen (14), welche zur Aufnahme von Kollektoren dienen, übernimmt, wobei der Antrieb der Gesamtanlage von einem, in dieser integrierten, Getriebemotor (24) übernommen wird, wobei die am vorderen Ende gekröpften Tragarme.(10) Bohrungen (11) aufweisen in welche Laschen (12) über eine Verbindungswelle (13) drehbar gelagert eingreifen, wobei die Laschen (12) mit ihrer Außenseite mit einer Traverse(14) für eine vorgesehene Kollektoraufnahme fest verbunden sind, so dass je nach Sonnenstand diese zwischen 0° - 90° bewegbar ist, da sie mittig und oberhalb der Verbindungswelle (13) mit einem Stößelaufnahmeblech (18) verbunden ist, welches am unteren Ende mit einer Tastarmhohlstößelwelle (19), welche durch die Hohlwelle (7) hindurch geführt wird und so die Verbindung zu einem am unteren Ende der Tastarmhohlstößelwelle (19) angebrachten Tastfinger (20) herstellt.

2. Steueranlage nach Anspruch 1 **dadurch gekennzeichnet, dass** der mit der Tastarmhohlstößelwelle (19) verbundene Tastfinger (20) über einen im Grundkörper (1) eingesetzten, mit einer entsprechenden Steigung versehenen Sonnenbahnlaufring (21) zur Erreichung der Winkelstellung der Traverse (14) gleitet, wobei die Tastarmhohlstößelwelle (19) auch durch andere geeignete Mittel wie einen Zahnstangenmotor oder einen Gewindemotor verstellbar ist.

3. Steueranlage nach Anspruch 1 und 2 **dadurch gekennzeichnet, dass** der die Gesamtsteuerung der Anlage auslösende Getriebemotor (24) durch eine Elektroniksonnenuhr, die mit einer Fotozelle gekoppelt ist angesteuert wird.

4. Steueranlage nach den vorhergehenden Ansprüchen, **dadurch gekennzeichnet, dass** der Grundkörper (1), entsprechend der statischen Ansprüche, mit Verstärkungssicken (3) ausgerüstet ist und einen integrierten Kabelkanal (2) enthält sowie beidseitig durch in bestimmten Abständen angebrachte Füße (4) gehalten wird.

5. Steueranlage nach den vorhergehenden Ansprüchen **dadurch gekennzeichnet, dass** die im Grundkörper (1) senkrecht eingelassenen Achskörper (5) mit dem Grundkörper (1) mit Halteklammern (6) fest verbunden sind.

6. Steueranlage nach den vorhergehenden Ansprüchen **dadurch gekennzeichnet, dass** die durch den Achskörper (5) geführte Hohlwelle (7) oben durch ein Schrägrollenlager (8) und unten durch ein Kugellager (9) gestützt ist.

7. Steueranlage nach den vorhergehenden Ansprüchen **dadurch gekennzeichnet, dass** die Tastarmhohlstößelwelle (19) gleichzeitig als Stromkabelführung (22) nutzbar ist und mit einer Schutzhülle (23) versehen ist.

8. Steueranlage nach vorhergehenden Ansprüchen **dadurch gekennzeichnet, dass** das Antriebsrad (15) je nach Übertragungselement entsprechend ausgeformt ist.

## Claims

1. Control system for solar panels using a plurality of driveable drive wheels which are connected to one another, spindle bodies (5) being set perpendicularly in a base body (1) at predetermined intervals, a hollow shaft (7) being guided in each of said spindle bodies (5), the upper part protruding out of the spindle body (5) being connected to a supporting arm (10), and a correspondingly designed drive wheel (15) being fitted at the lower end of the projection of the hollow shaft (7) that protrudes out of the spindle body (5) and being surrounded by a transmission element (16) which takes on the function of transmitting to all cross arms (14) which are to be driven and are used for accommodating collectors, driving of the overall system being taken on by a geared motor (24) which is integrated in this overall system, the supporting arms (10) which are bent at right angles at the front end having holes (11) in which tabs (12) engage, mounted in a rotatable manner, via a connecting shaft (13), the tabs (12) being fixedly connected with their outer side to a cross arm (14) for a collector receptacle provided, with the result that, depending on the position of the sun, this collector receptacle can be moved between 0° and 90° since it is connected to a plunger accommodating plate (18) centrally and above the connecting shaft (13), which plunger accommodating plate (18) is connected at the lower end to a probe arm hollow plunger shaft (19), which is guided through the hollow shaft (7) and therefore produces the connection to a probe finger (20) fitted to the lower end of the probe arm hollow plunger shaft (19).

2. Control system according to Claim 1, **characterized in that** the probe finger (20) which is connected to the probe arm hollow plunger shaft (19) slides via a sun path running ring (21), which is inserted in the base body (1) and is provided with a corresponding inclination, for achieving the angular position of the cross arm (14), it also being possible to adjust the probe arm hollow plunger shaft (19) using other suitable means such as a rack motor or a thread motor.

3. Control system according to Claims 1 and 2, **characterized in that** the geared motor (24) triggering the overall control of the system is driven by an electronic sun dial, which is coupled to a photo cell.

4. Control system according to one of the preceding claims, **characterized in that** the base body (1), in accordance with the static demands, is equipped with reinforcing beads (3), contains an integrated cable channel (2) and is held on both sides by feet (4) fitted at certain intervals.

5. Control system according to one of the preceding claims, **characterized in that** the spindle bodies (5) which are set perpendicularly in the base body (1) are fixedly connected to the base body (1) using holding clamps (6).

6. Control system according to one of the preceding claims, **characterized in that** the hollow shaft (7) guided through the spindle body (5) is supported at the top by an angular roller bearing (8) and at the bottom by a ball bearing (9).

7. Control system according to one of the preceding claims, **characterized in that** the probe arm hollow plunger shaft (19) can be used at the same time as a power cable guide (22) and is provided with a protective jacket (23).

8. Control system according to one of the preceding claims, **characterized in that** the drive wheel (15) is correspondingly shaped depending on the transmission element.

## Revendications

1. Équipement de commande pour champs solaires employant plusieurs roues d'entraînement commandables qui sont reliées, des corps d'axe (5) étant noyés verticalement à intervalles prévus dans un corps de base (1), dans lesquels un arbre creux (7) est à chaque fois guidé, la partie supérieure faisant saillie hors du corps d'axe (5) étant reliée à un bras porteur (10) et une roue d'entraînement (15) configurée en conséquence étant montée à l'extrémité inférieure de l'extrémité en porte-à-faux de l'arbre creux (7) faisant saillie hors du corps d'axe (5), laquelle est entourée par un élément de transmission (16), lequel prend en charge la transmission vers toutes les traverses (14) à commander qui servent à recevoir des collecteurs, l'entraînement de l'ensemble de l'équipement étant pris en charge par un motoréducteur (24) intégré dans celui-ci, les bras porteurs (10) contrecoudés à l'extrémité avant présentant des orifices (11) dans lesquels pénètrent des attaches (12) logées de manière à pouvoir tourner par le biais d'un arbre de liaison (13), les attaches (12) étant fixées à demeure par leur côté extérieur avec une traverse (14) pour recevoir un collecteur donné de telle sorte que celle-ci puisse être déplacée entre 0° et 90°, suivant la position du soleil, car elle est reliée au centre et au-dessus de l'arbre de liaison (13) avec une tôle d'accueil d'un coulisseau (18), laquelle est munie à son extrémité inférieure d'un arbre de coulisseau creux de bras de palpage (19) qui passe à travers l'arbre creux (7) et établit ainsi la liaison avec un doigt de palpage (20) monté à l'extrémité inférieure de l'arbre de coulisseau creux de bras de palpage (19).

2. Équipement de commande selon la revendication 1, **caractérisé en ce que** le doigt de palpage (20) relié avec l'arbre de coulisseau creux de bras de palpage (19) glisse par le biais d'une bague de roulement de trajectoire solaire (21) dans le corps de base (1) munie d'un pas correspondant pour atteindre la position angulaire de la traverse (14), l'arbre de coulisseau creux de bras de palpage (19) pouvant également être positionné par d'autres moyens appropriés tels qu'un moteur à crémaillère ou un moteur à vis sans fin.

3. Équipement de commande selon la revendication 1 et 2, **caractérisé en ce que** le motoréducteur (24) qui réalise la commande globale de l'équipement est commandé par une horloge solaire électronique qui est couplée avec une cellule photoélectrique.

4. Équipement de commande selon l'une des revendications précédentes, **caractérisé en ce que** le corps de base (1), conformément aux contraintes statiques, est équipé de moulures de renforcement (3) et contient un chemin de câble (2) intégré et il est maintenu des deux côtes par des pieds (4) disposés à intervalles donnés.

5. Équipement de commande selon l'une des revendications précédentes, **caractérisé en ce que** les corps d'axe (5) noyés verticalement dans le corps de base (1) sont fixés à demeure au corps de base (1) avec des pinces de maintien (6).

6. Équipement de commande selon l'une des revendications précédentes, **caractérisé en ce que** l'arbre creux (7) qui passe à travers le corps d'axe (5) est soutenu en haut par un palier à rouleaux obliques (8) et en bas par un roulement à billes (9).

7. Équipement de commande selon l'une des revendications précédentes, **caractérisé en ce que** l'arbre de coulisseau creux de bras de palpage (19) peut simultanément être utilisé comme un guide de câble électrique (22) et est muni d'une gaine de protection (23).

8. Équipement de commande selon l'une des revendications précédentes, **caractérisé en ce que** la roue d'entraînement (15) est façonnée en conséquence d'après l'élément de transmission.
